# EUROPEAN PATENT APPLICATION

(11) **EP 4 191 430 A1**
(43) Date of publication of application: **07.06.2023**
(21) Application number: 21893654.0
(22) Date of filing: 18.10.2021
(51) Int. Cl.: G06F 16/27

(54) **DATA PROCESSING METHOD AND APPARATUS APPLIED TO BLOCKCHAIN SYSTEM**

(30) Priority: 20.11.2020 CN 202011306241
(71) Applicant: Tencent Technology (Shenzhen) Company Limited, Shenzhen, Guangdong 518057 (CN)
(72) Inventor: LI, Maocai, Shenzhen, Guangdong 518057 (CN); LAN, Hu, Shenzhen, Guangdong 518057 (CN); WANG, Zongyou, Shenzhen, Guangdong 518057 (CN); ZHOU, Kaiban, Shenzhen, Guangdong 518057 (CN); LIU, Pan, Shenzhen, Guangdong 518057 (CN); ZHU, Gengliang, Shenzhen, Guangdong 518057 (CN); SHI, Yifang, Shenzhen, Guangdong 518057 (CN)
(74) Representative: Eisenführ Speiser
(86) International application number: PCT/CN2021/124282
(87) International publication number: WO 2022/105505

(57) **Abstract**

Disclosed are a data processing method and apparatus applied to a blockchain system. The method comprises: in response to a request of an access terminal for writing target data into a blockchain, determining a target node role that has permission to read the target data, wherein an access terminal connected to each node device has the permissions of a node role corresponding to the node device; acquiring an encryption key corresponding to the target node role; performing encryption processing on the target data according to the encryption key, so as to obtain ciphertext corresponding to the target data, wherein the ciphertext corresponding to the target data can be decrypted by an access terminal corresponding to the target node role; and storing, in the blockchain, the ciphertext corresponding to the target data. By means of the technical solution provided in the embodiments of the present application, not only can the efficiency of data sharing among a plurality of node roles be greatly improved, but the security of data sharing can also be ensured.

## Description

### RELATED APPLICATION

The present disclosure claims priority to China Patent Application No. 202011306241.0, entitled "METHOD AND APPARATUS FOR DATA PROCESSING APPLICABLE TO BLOCKCHAIN SYSTEM", filed on November 20, 2020, with China National Intellectual Property Administration, the contents of which are hereby incorporated by reference in its entirety.

### FIELD OF THE TECHNOLOGY

The present disclosure relates to the technical field of blockchains, and particularly to data processing applicable to a blockchain system.

### BACKGROUND OF THE DISCLOSURE

Different organizations manage different affairs, and hence data thereof is usually stored fragmentarily at respective organizations. In some scenarios, the data needs to be shared among these organizations.

Currently, a common manner of data sharing is connecting all organizations among which the data needs to be shared, such that the data can be acquired from the connected organizations. Different organizations have different standards for device interfaces and different collaboration processes. As a result, the data sharing among organizations has rather low efficiency.

### SUMMARY

In order to address the foregoing technical problem, a method and an apparatus for data processing applicable to a blockchain system, an electronic device, and a computer-readable storage medium are provided according to embodiments of the present disclosure. According to embodiments of the present disclosure, data sharing between different organizations is implemented through blockchain technology, which can improve efficiency of the data sharing between different significantly.

In one aspect, a method for data processing applicable to a blockchain system is provided according to embodiments of the present disclosure. The blockchain system comprises multiple node devices, each of which is connected to at least one access terminal and corresponds to a node role, where the at least one access terminal each has a permission of the node role. The method is applicable to a node device in the blockchain system, and comprises: determining, in response to a request which is from a target access terminal and for writing target data into a blockchain, a target node role which has a reading permission for the target data, where the target access terminal is one of the at least one access terminal connected to the node device; acquiring an encryption key corresponding to the target node role; encrypting the target data based on the encryption key to obtain a cipher text corresponding to the target data, where an access terminal corresponding to the target node role is capable to decrypt the cipher text; and storing the cipher text into the blockchain.

In another aspect, an apparatus for data processing applicable to a blockchain system is provided according to embodiments of the present disclosure. The blockchain system comprises multiple node devices, each of which is connected to at least one access terminal and corresponds to a node role, where the at least one access terminal each has a permission of the node role. The apparatus is configured in a node device in the blockchain system, and comprises: a node-role determining module, configured to determine, in response to a request which is from a target access terminal and for writing target data into a blockchain, a target node role which has a reading permission for the target data, where the target access terminal is one of the at least one access terminal connected to the node device; an encryption-key acquiring module, configured to acquire an encryption key corresponding to the target node role; a data encrypting module, configured to encrypt the target data based on the encryption key to obtain a cipher text corresponding to the target data, where an access terminal corresponding to the target node role is capable to decrypt the cipher text; and a data storing module, configure to store the cipher text into the blockchain.

In another aspect, a method for data processing applicable to a blockchain system is provided according to embodiments of the present disclosure. The blockchain system comprises multiple node devices, each of which is connected to at least one access terminal and corresponds to a node role, where the at least one access terminal each has a permission of the node role. The method is applicable to a node device in the blockchain system, and comprises: transmitting, in response to a request which is from a target access terminal and for reading target data, a cipher text to the target access terminal, where the cipher text corresponds to the target data and is stored in a blockchain, such that the target access terminal decrypts the cipher text corresponding to the target data based on a private key corresponding to a node role of the target access terminal to obtain the target data, where the target access terminal is one of that at least one access terminal connected to the node device, the cipher text is obtained by encrypting the target data based on an encryption key, and the encryption key corresponds to a target node role has a reading permission for the target data.

In another aspect, an electronic device is provided according to embodiments of the present disclosure, comprising: a processor and a memory, where the memory stores computer-readable instructions, and the computer-readable instructions when executed by the processor are configured to implement the foregoing method for data processing applicable to the blockchain system.

In another aspect, a computer-readable storage medium storing a computer program is provided according to embodiments of the present disclosure, where the computer program is configured to implement the foregoing method for data processing applicable to the blockchain system.

In another aspect, a computer program product or a computer program is provided, comprising computer instructions, where the computer instructions are stored in a computer-readable storage medium, a processor of a computer device reads the computer instructions from the computer-readable storage medium, and the processor when executing the computer instructions configures the computer device to perform the foregoing method for data processing applicable to the blockchain system.

In technical solutions according to embodiments of the present disclosure, the node devices in the blockchain system may be specifically implemented as servers of different organizations. Each node device stores the whole of block data, namely, data of each organization is stored in the blockchain such that each organization may acquire data of another organization from the blockchain. Thereby, data sharing is standardized and generalized through blockchain technology, which improves efficiency of data sharing greatly.

Moreover, the reading permission for block data stored in the blockchain is set for the access terminals through the node role, and the access terminal(s) connected to each node device has the permission of the node role corresponding to such node device. Thereby, the data in the blockchain can be obtained only by another access terminal having the reading permission for such data. Namely, only the organization having the reading permission can obtain the data of another organization from the blockchain. The efficiency of data sharing is improved among different organizations while ensuring safety of the data sharing security may be ensured.

It should be appreciated that the foregoing general description and following detailed description are merely illustrative and explanatory, and are not intended for limiting the present disclosure.

### BRIEF DESCRIPTION OF THE DRAWINGS

Figure 1 is a schematic diagram of an implementation environment according to an embodiment of the present disclosure.
Figure 2 is a flowchart of a method for data processing applicable to a blockchain system according to an embodiment of the present disclosure.
Figure 3 is a flowchart of acquiring an encryption key corresponding to a target node role according to an embodiment of the present disclosure.
Figure 4 is a flowchart of acquiring a shared-in-role key corresponding to a target node role according to an embodiment of the present disclosure.
Figure 5 is a flowchart of another method for data processing applicable to a blockchain system on a basis of an embodiment as shown in Figure 2.
Figure 6 is a block diagram of an apparatus for data processing applicable to a blockchain system according to an embodiment of the present disclosure.
Figure 7 is a schematic structural diagram of a computer system of an electronic device suitable for implementing embodiments of the present disclosure.

### DESCRIPTION OF EMBODIMENTS

Hereinafter embodiments are illustrated in details, and examples thereof the embodiments are depicted in the drawings. Unless otherwise specified, the same reference numerals in different drawings represent the same or similar elements when the following description refers to the drawing. Implementations described in following embodiments do not represent all implementations according to the present disclosure. Rather, they are merely examples of apparatuses and methods which are set forth in the claims and in consistency with some aspects of the present disclosure.

Blocks in diagrams as shown in the drawings are merely functional entities and do not necessarily correspond to physically independent entities. That is, the functional entities may be implemented as software, as one or more hardware modules or integrated circuits, or as different networks and/or processors and/or microcontrollers.

Blocks in flowcharts as shown in the accompanying drawings are merely exemplary illustration, do not necessarily include all content and operations/steps, and need not be executed in an order as described. For example, some operations/steps may be further divided, while some operations/steps may be combined or partially combined. Therefore, an actual execution order may change according to an actual situation.

Herein the term "multiple" refers to two or more. The term "and/or" describes an association relationship among associated objects, and represents three candidate relationships. For example, "A and/or B" may represent three cases: only A exists, both A and B exist, and only B exists. Generally, the symbol "/" indicates an "or" relationship between associated objects prior and subsequent to such symbol.

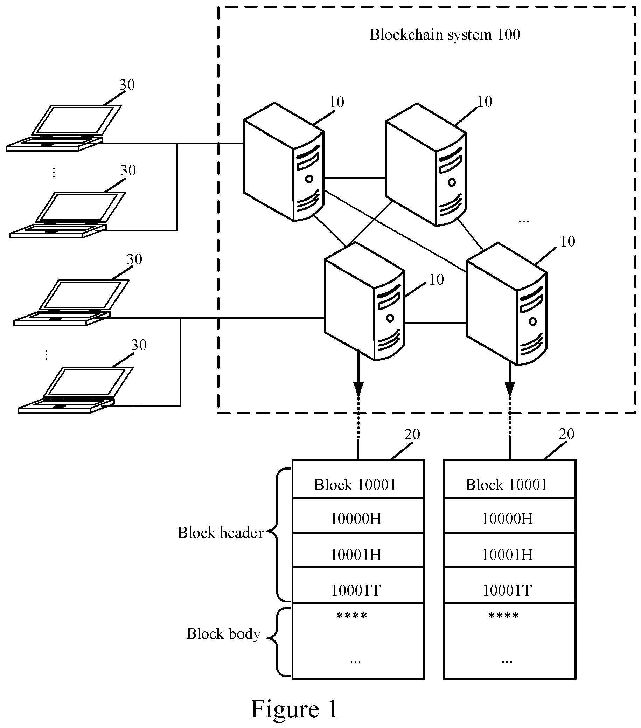

Reference is made to Figure 1, which is a schematic diagram of an implementation environment relevant to the present disclosure. Specifically, the implementation environment is a blockchain system.

The blockchain system 100 as shown in Figure 1 refers to a system for data sharing among node devices 10, each of which stores an entire blockchain 20. As shown in Figure 1, the blockchain 20 is formed by multiple blocks, each of which comprises a block header and a block body. The block headers stores information such as a height of the block. Block data stored in each node device 10 is completely the same.

Each node device 10 is connected to at least one access terminal 30. For example, the access terminal 30 may be connected to the node device via a wired or wireless network, so as to facilitate data interaction with the node device 10. Any access terminal 30 is capable to write data into the blockchain 20 or read data stored in the blockchain 20, and thereby the block data are shared with high efficiency.

Generally, the blockchain 20 stores massive, complex data. In an exemplary application scenario, the node devices 10 are specifically implemented as servers which are deployed by different national departments (such as a public security department, a civil affairs department, a taxation department, an industry-and-commerce department, and an education department), respectively, in the blockchain system 100. Hence, the blockchain 20 stores data of all national departments. The access terminal 30 connected to the node device 10 is specifically implemented as a user access terminal which belongs to the corresponding national department.

Data of the national departments is usually highly confidential, and once hacked, there would be serious consequences. Therefore, in order to ensure data security the blockchain system 100 set permissions, such as permissions for reading and/or writing, for block data stored in the blockchain 20 when data is shared among different national departments. As an example, the taxation department may read data concerning children education, parent supporting, housing loan, and the like of a citizen from the blockchain 20, but cannot modify these data, when handling credits of the individual income tax for such citizen. As another example, the public security department can modify only its own data stored in the blockchain 20, such as data concerning registered residence and criminal records of citizens, but cannot modify data of the other national departments which is also stored in the blockchain 20.

Hence, the blockchain system 100 as shown in Figure 1 is capable to implement data sharing with high efficiency while ensuring data security in the data sharing, and hence is suitable for any scenario having a high requirement on both efficiency and data security of data sharing. For example, the blockchain system is further applicable to scenarios of data sharing among departments or branches of an enterprise, and data sharing among multiple users. The present disclosure is not limited thereto.

The access terminal 30 in the blockchain system 100 as shown in Figure 1 may be an electronic device, such as a smart phone, a tablet computer, a notebook computer, and a personal computer. The node device 10 may be an independent physical server, may be a server cluster or a distributed system formed by multiple physical servers, or may further be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an Al platform, which is not limited herein.

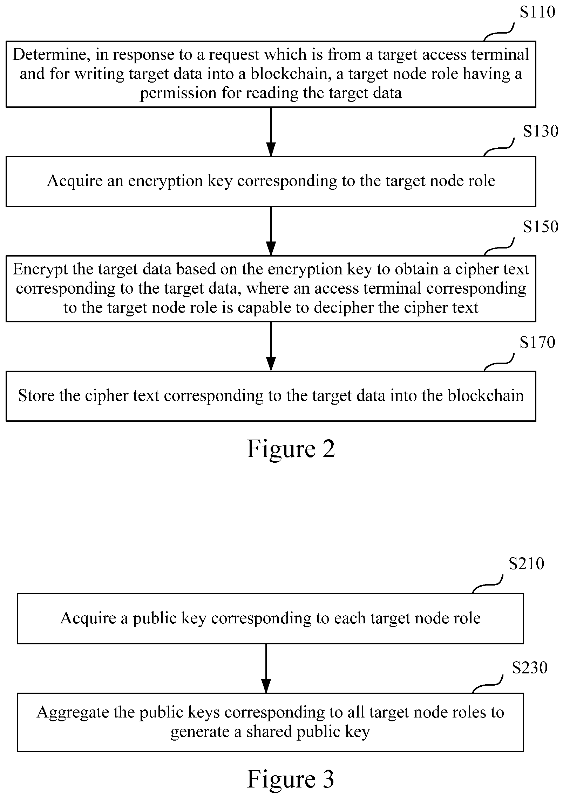

Figure 2 is a flowchart of a method for data processing applicable to a blockchain system according to an embodiment of the present disclosure.

The blockchain system to which the method is applied may be the blockchain system 100 as shown in Figure 1. The method may be applicable to any node device 10 in the blockchain system 100.

In other embodiments, the method may be applied to another blockchain system. The blockchain system comprises multiple node devices, such that the method is performed through any node device. Each node device is connected to one or more access terminals, and stores a complete blockchain. That is, each node device stores entire block data. Each piece of the block data in the blockchain is provided with a corresponding permission.

Permissions for the block data may include a reading permission and a writing permission. An access terminal having the reading permission for a piece of block data is capable to read such piece of block data from the blockchain. An access terminal having the writing permission for a piece of block data is capable to modify such piece of block data stored in the blockchain.

In addition, each node device is configured with a corresponding node role, and the access terminal connected with each node device has a permission of the node role corresponding to such node device. Thereby, the permissions of the multiple access terminals for the block data are subject to consistent management based on the node roles. That is, a node device is usually connected to multiple access terminals which have identical permissions with respect to the block data, and hence the access terminals connected to the same node device should have the same node role, which is specifically the node role corresponding to the node device connected to them. Further using the aforementioned example, access terminals corresponding to the same national department correspond to the same node role, which is specifically a node role corresponding to such national department.

Generally, different node devices correspond to different node roles. In practice, it is possible that multiple node devices correspond to the same node role. For example, data of a certain national department has a large size, high complexity, and other features, which usually require deploying multiple devices to process the data. In such case, all node devices belonging to the same national department should have the same node role, so as to ensure that the access terminals corresponding to the same national department have the same permission with respect to the block data and thereby ensure consistent management on the block data in the blockchain system.

Reference is made to Figure 2. In an embodiment, the method for data processing applicable to a blockchain system may comprise steps S110 to S170, which are described in detail as follows.

In step S110, a target node role having a reading permission for target data is determined in response to a request, which is from a target access terminal and for writing the target data into a blockchain.

The target access terminal is connected to a node device that performs the method for data processing applicable to the blockchain system according to embodiments of the present disclosure. The node device is an arbitrary node device in the blockchain system. The target access terminal is an initiator of the request, and is configured to request writing the target data into the blockchain.

In some embodiments, the target access terminal requests writing the target data into the blockchain, and specifically requests adding to-be-stored data into the blockchain. For example, the public security department requests adding citizen information of newborns into the blockchain. In other embodiments, the target access terminal requests writing the target data into the blockchain, and specifically requests modifying block data stored in the blockchain. For example, the civil affairs department requests modifying a citizen marital status stored in the blockchain from "never married" to "now married".

After receiving the request transmitted from the target access terminal, the node device acquires the target node role having the reading permission for the target data in response to the request from the target access terminal being for writing the target data into the blockchain. Then, the node device acquires an encryption key, which is for encrypting the target data, according to the target node role. That is, herein the target data is stored in the blockchain as a cipher text, which ensures secure storage of the target data in the blockchain.

In order to ensure the security of the block data, all important data stored in the blockchain should be stored as cipher texts. Only an access terminal having permission is capable to decrypt a cipher text of a piece of data successfully, so as to obtain the correct data.

In some embodiments, the target data which the target access terminal requests writing into the blockchain comprises a key field, and the target node role having the reading permission for the target data may be acquired according to the key field. That is, the target access terminal specifies, in the key field, information on the reading permission for the target data. Thereby, such information restricts that only an access terminal having the reading permission for the target data can acquire the target data which has been stored into the blockchain.

Alternatively or additionally, the target access terminal may specify information on writing permission for the target data in the key field. Thereby, such information restricts that only an access terminal having the writing permission for the target data can modify the target data which has been stored into the blockchain.

Generally, any access terminal having the same node role as the target access terminal may have the writing permission and the reading permission for the target data. For example, all access terminals belonging to the same national department can modify and read data of such department stored in the blockchain. Hence, in some embodiments, the target node role having the reading permission for the target data may include a node role of the target access terminal. The node role of the target access terminal may be obtained according to the key field comprised in the target data.

In other embodiments, for example, in some application scenarios concerning standardized management on block data permissions, the target node role having the reading permission for the target data can be determined according to the node role of the target access terminal.

For example, in an application scenario concerning standardized management on block data permissions, a mapping rule between node roles and block data permissions is stored in the node device in advance. For example, the mapping rule defines that data written by an access terminal having node role A into the blockchain can be legally obtained only by access terminals having node role B and access terminals having node role C. Therefore, after the access terminal having node role A requests writing the target data into the blockchain, node role B and node role C may be determined directly as the target node roles having the reading permission for the target data.

In step S130, an encryption key corresponding to the target node role is acquired.

As mentioned above, herein the acquired encryption key is configured to encrypt the target data so as to obtain the cipher text corresponding to the target data. After the cipher text corresponding to the target data is stored into the blockchain, only the access terminal having the reading permission for the target data can obtain the target data. Thereby, the target data is stored into the blockchain with reliability.

In order to ensure such reliability, in some embodiments, the encryption key for encrypting the target data may be a symmetric key generated in the node device. The node device transmits the generated symmetric key to the access terminal(s) corresponding to the target node role, such that the access terminal(s) is capable to decrypt the cipher text corresponding to the target data successfully according to the received symmetric key. Thereby, the access terminal(s) obtain the target data.

An access terminal without the reading permission for the target data does not receive the symmetric key transmitted by the node device, and thus cannot decrypt the cipher text corresponding to the target data. Even though the cipher text corresponding to the target data may be obtained by an arbitrary access terminal, only the access terminal having the reading permission for the target data is capable to decrypt the cipher text and thereby obtain the target data. Hence, the target data is stored into the blockchain with high reliability and security.

In other embodiments, the encryption key for encrypting the target data is specifically a shared public key corresponding to all target node roles. The cipher text obtained by encrypting the target data based on the shared public key can be successfully decrypted based on a private key corresponding to each target node role.

Therefore, after the cipher text corresponding to the target data is stored into the blockchain, an access terminal having the reading permission for the target data can decrypt the cipher text corresponding to the target data according to the private key corresponding to its own node role, so as to obtain the target data successfully. An access terminal not having the reading permission for the target data may also decrypting the cipher text corresponding to the target data according to the private key corresponding to its own node role, but cannot succeed in decryption. Hence, the target data is stored into the blockchain with high reliability.

In step S150, the target data is encrypted based on the encryption key to obtain a cipher text corresponding to the target data, where an access terminal corresponding to the target node role is capable to decrypt the cipher text corresponding to the target data.

Herein the target data is encrypted based on the encryption key obtained in the step S130, namely, an encryption operation is performed on the target data according to the encryption key. Thereby, the cipher text corresponding to the target data is obtained.

The encryption key for encrypting the target data is determined according to each target node role having the reading permission for the target data, and hence the cipher text corresponding to the target data can be successfully decrypted only by access terminal(s) having the target node role. Therefore, it is further ensured that only the access terminal having the reading permission for the target data can obtain the target data which has been stored into the blockchain.

In step S170, the cipher text corresponding to the target data is stored into the blockchain.

In the blockchain system, the block data stored in each node device should be completely the same, and the cipher text corresponding to the target data should also be consistently stored in the blockchain deployed in each node device. Hence, the cipher text corresponding to the target data may be subject to consensus in the blockchain system, and stored into the blockchain in case of the consensus being passed, which ensures integrity of the blockchain stored in each node device. As an example, all or a part of the node devices in the blockchain system may serve as consensus nodes when performing consensus on the cipher text corresponding to the target data.

A technical solution is taken as an example in which the node devices are servers of different national departments. Each national department maintains its own data on the blockchain, for example, each national department maintains certain fields of the data of a citizen in the blockchain. Hence, the data is shared among different national departments through the blockchain, which improves efficiency of data sharing efficiency greatly.

In addition, technical solutions provided herein ensure the security and the reliability of the block data stored in the blockchain based on the node roles corresponding to the node devices. It is further taken as an example that servers of different national departments serve as the node devices, and permissions are set for pieces of data stored in the blockchain. Data of a certain citizens have 100 fields in the blockchain, among which the department of civil affairs has a reading permission for 40 fields and a writing permission for 10 fields. Thereby, consistent maintenance on the block data is implemented among multiple departments, and each piece of the block data offers minimum levels of permission, namely, a minimum level of reading permission and/or a minimum level of writing permission.

Figure 3 is a flowchart of acquiring an encryption key corresponding to a target node role according to an embodiment of the present disclosure. As shown in Figure 3, the operation of acquiring the encryption key corresponding to the target node role in the step S130 may comprise steps S210 to S230. In this embodiment, the encryption key includes a shared public key. Hereinafter details are illustrated.

In step S210, a public key corresponding to each target node role is acquired.

Herein the public key corresponding to each target node role is associated with a private key corresponding to such target node role. For example, a cipher text obtained by data encryption based on the public key corresponding to a target node role can be decrypted based on the private key corresponding to such target node role, so as to obtain original data before the encryption. Moreover, a signature obtained based on the private key corresponding to a target node role can be verified based on the public key corresponding to such target node role.

In some embodiments, node devices corresponding to different node roles in the blockchain system each generates a pair of a private key and a public key which correspond to the corresponding node role. The generated private key is stored at each access terminal connected with the node device through synchronization, and the generated public key is transmitted to the blockchain system. For example, the node device may transmit the generated public key to an authoritative device, and then the authoritative device incorporates the received public key into an authoritative certificate and issues the authoritative certificate to each node device.

Specifically, the authoritative device may be a node device in the blockchain system, and the node device is such authoritative that other node devices trust the authoritative certificate issued by the authoritative device. Thereby, each node device in the blockchain system is aware of the public keys corresponding to different node roles, and can obtain the public key corresponding to each target node role.

In other embodiments, a random number corresponding to each target node role may be generated in the node devices, and the public key corresponding to each target node role is thereby generated based on the random number corresponding to such target node role. Generating the public key based on the corresponding random number is a process of encrypting the random number, and a result of the encrypting serves as the public key.

Due to the randomness, random numbers corresponding to all target node roles are different when generated in the node devices. Therefore, the public keys corresponding to all target node roles are also different when generated in the node devices.

In addition, in order to enable an access terminal having the reading permission for the target data to decrypt the cipher text corresponding to the target data successfully based on the private key corresponding to its node role, the node devices need to transmit the random number corresponding to each target node role to access terminal(s) having such node role, such that the access terminal(s) can generate the private key corresponding to its/their node role based on the random number. Therefore, any access terminal having the reading permission for the target data can generate a private key corresponding to its node role according to the received random number, and decrypt the cipher text corresponding to the target data successfully based on the private key.

In step S230, the public keys corresponding to all target node roles are aggregated to generate the shared public key.

As discussed above, herein the shared public key has a following characteristic: the cipher text obtained by encrypting the target data based on the shared public key is decryptable based on the private key corresponding to each target node role. Therefore, in this embodiment, the public keys corresponding to all target node roles need to be aggregated to generate the shared public key. The aggregation refers to a process of establishing a correlation and the shared public key and the private key corresponding to each target node role according to the public keys corresponding to all target node roles.

In some embodiments, the aggregation of the public keys corresponding to all target node roles may be implemented through a threshold signature (Threshold Sig) algorithm. Specifically, a threshold signature is calculated based on the public keys corresponding to all target node roles through the threshold signature algorithm, and the threshold signature is configured to be verifiable by private key(s) corresponding to at least n (0 < n < m, m being the total number of the target node roles) target node roles. Such configured threshold signature is obtained as the shared public key. Herein n may be equal to 1 such that any access terminal corresponding to the target node role(s) can decrypt the cipher text corresponding to the target data stored in the blockchain successfully.

In other embodiments, the public keys corresponding to all target node roles may be concatenated to obtain a concatenated sequence, and then the concatenated sequence to obtain a coded sequence is coded. The coded sequence is configured such that during decoding the coded sequence, the coded sequence is determined to be successfully decoded when any segment of public key data in the concatenated sequence is obtained in the decoding. Such configured coded sequence is obtained as the shared public key.

The cipher text corresponding to the target data, which is obtained by encrypting the target data based on the foregoing shared public key, is decryptable based on the private key corresponding to any target node role, but not decryptable based on a private key corresponding to a node role other than the target node role. Therefore, security and reliability of storing the target data into the blockchain are ensured.

In another embodiment, the target data is also stored into the blockchain via a digital envelope, in order to improve the security of storage.

Hereinafter an implementation of the step S170 is illustrated. In one aspect, the target data is encrypted based on the encryption key corresponding to the target node role, and after the encryption the cipher text corresponding to the target data is stored into the blockchain. In another aspect, the encryption key is further encrypted to obtain a cipher text corresponding to the encryption key (namely, obtain a digital envelope), and the cipher text corresponding to the encryption key is stored into the blockchain together with the cipher text corresponding to the target data.

In a case that an access terminal requires reading the target data from the blockchain, the cipher text corresponding to the encryption key is first decrypted to obtain the encryption key, and then the cipher text corresponding to the target data is decrypted based on the obtained encryption key to obtain the target data. Herein the target data is subject to two layers of encryption, and correspondingly the access terminal needs to perform two layers of decryption to obtain the target data. Thereby, the security of the target data is further improved.

The access terminal needs to decrypt the cipher text corresponding to the target data successfully based on the encryption key which is obtained by decrypting the cipher text corresponding to the encryption key. In view of the above, the encryption key used herein may be a symmetric key, and encrypting the target data based on the encryption key is a process of encrypting the target data through a symmetric encryption algorithm.

In some embodiments, the encryption key may be encrypted according to the shared key corresponding to all target node roles, so as to obtain the cipher text corresponding to the encryption key. In such case, only an access terminal having the reading permission for the target data can decrypt the cipher text corresponding to the encryption key based on a private key corresponding to its node role, and thereby obtain the encryption key. Therefore, the manner of provided herein ensures that only an access terminal having the reading permission for the target data is capable to obtain the target data stored in the blockchain.

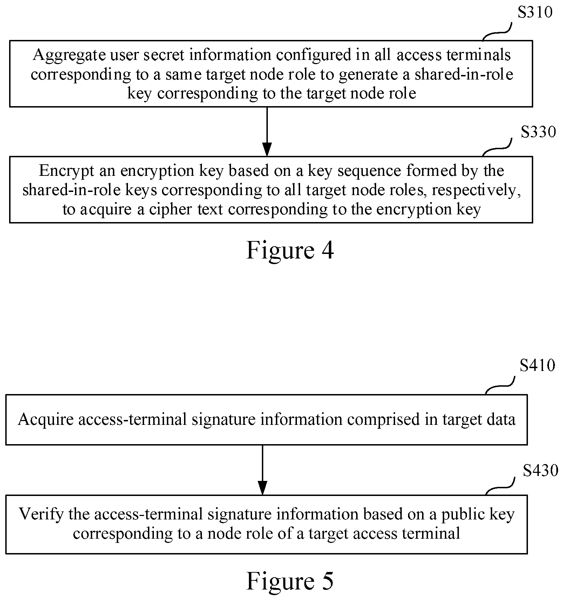

In another embodiment, the encryption key may be encrypted based on a shared-in-role key corresponding to all target node roles, so as to obtain the cipher text corresponding to the encryption key. As shown in Figure 4, the shared-in-role key corresponding to each target node role may be generated and used with reference to steps S310 to S330. Hereinafter details are illustrated.

In step S310, user secret information configured in all access terminals corresponding to a same target node role are aggregated to generate a shared-in-role key corresponding to such target node role.

In this embodiment, access terminals corresponding to each of different target node roles having the reading permission for the target data is treated as a subset, and a key is allocated to each subset. Thereby, the shared-in-role keys corresponding to different target node roles, respectively, are obtained.

Specifically, the user secret information is configured in each access terminal of each subset, and the user secret information may be arbitrary information. Each access terminal may be not capable to obtain the user secret information in other access terminals in the same subset, and generally different users correspond to different user secret information. Therefore, herein different shared-in-role keys are obtained corresponding to different target node roles.

In step S330, the encryption key is encrypted based on a key sequence formed by the shared-in-role keys corresponding to all target node roles, so as to obtain a cipher text corresponding to the encryption key.

In a case that the shared-in-role key corresponding to a target node role is denoted as Ki, the key sequence formed the shared-in-role keys corresponding to all target node roles may be denoted as "Ki1, Ki2, ..., Kim", in which m represents the total number of the target node roles. A session key may be encrypted based on such key sequence to obtain a cipher text having a form such as "i1, i2, ..., im, EKi1(K), EKi2(K), ..., EKim(K)".

In this embodiment, only an access terminal having the reading permission for the target data can decrypt the cipher text corresponding to the encryption key according to the user secret information configured in such access terminal, and thereby obtain the encryption key. Therefore, the manner of provided herein ensures that only an access terminal having the reading permission for the target data is capable to obtain the target data stored in the blockchain.

Figure 5 is a flowchart of another method for data processing applicable to a blockchain system on a basis of an embodiment as shown in Figure 2. As shown in Figure 5, before the target node role having the reading permission for the target data is determined in the step S110, the method further comprise steps S410 to S430. Hereinafter details are illustrated.

In step S410, access-terminal signature information comprised in the target data is acquired.

In this embodiment, the access-terminal signature information is generated by the target access terminal through signing based on its private key, and is carried in the target data. After receiving the request from the target access terminal for writing the target data into the blockchain, the node device acquires the access-terminal signature information carried in the target data.

In step S430, the access-terminal signature information is verified based on a public key corresponding to a node role of the target access terminal.

After acquiring the access-terminal signature information, the node device verifies the access-terminal signature information based on the public key corresponding to the node role of the target access terminal. In a case that the access-terminal signature information passes the verification, it indicates that the target access terminal has the writing permission for the target data, and thus S110 is performed. In a case that the access-terminal signature information does not pass the verification, it indicates that the target access terminal does not have the writing permission for the target data, and the node device rejects the request from the target access terminal for writing the target data into the blockchain.

The node device may store the public keys corresponding to different node roles. For example, as described in the forgoing embodiment, each of the node devices having different node roles in the blockchain system may generate the pair of the private key and the public key that corresponding to the corresponding node role, and the generated private key is stored into each node device through synchronization. Hereinafter an implantation of the step S430 is illustrated. The node device may determine a node role of the target access terminal concerning the target data based on a key field in the target data, then acquire the locally stored public key corresponding to such node role, and further verify the access-terminal signature information according to the acquired public key.

Therefore, in this embodiment, after the request from the target access terminal for writing the target data into the blockchain is received, it is further verified that whether the target access terminal has the writing permission for the target data, so as to further ensure reliability of storing the target data into the blockchain. For example, the public security department may issue a request for modifying a piece of data in the blockchain, and the housing-and-development department has the writing permission for such piece of data. After receiving the request initiated by the of public security department, the node device may determine that the public security department does not have the writing permission for such piece of data, and rejects such request. Thereby, the data in the blockchain cannot be tampered, which ensures reliability of the block data stored in the blockchain.

In another embodiment, in case of requiring reading the target data stored in the blockchain, a target access terminal may initiate a request of reading the target data stored in the blockchain. The target access terminal may be an arbitrary access terminal, and the target access terminal is not necessary to be the one who requested writing the target data stored in the blockchain.

In response to the request from the target access terminal for reading the target data stored in the blockchain, the node device transmits a cipher text, which corresponds to the target data stored in the blockchain, to the target access terminal. Thereby, the target access terminal decrypts the cipher text corresponding to the target data based on a private key corresponding to its node role, in order to obtain the target data.

The access terminal(s) connected with each node device has/have a permission of the node role corresponding to the node device. The cipher text corresponding to the target data is obtained by encrypting on the target data based on an encryption key. The encryption key corresponds to a target node role having a reading permission for the target data. Details of acquiring the encryption key and encrypting the target data may refer to the foregoing embodiments, and are not repeated herein.

In a case that the target data is stored in the blockchain via a digital envelope, namely, not only the cipher text corresponding to the target data but also a cipher text corresponding to the encryption key is stored in the blockchain, the node device further needs to transmit the cipher text corresponding to the encryption key to the target access terminal. Thereby, the target access terminal decrypts the cipher text corresponding to the encryption key based on the private key corresponding to its node role to obtain the encryption key, and decrypts the cipher text corresponding to the target data based on the obtained encryption key.

The cipher text corresponding to the encryption key is obtained by encrypting the encryption key based on a shared key corresponding to the target node role(s). The shared key is generated by aggregating public keys corresponding to all target node roles. Details may refer to those described in the foregoing embodiments, and are not repeated herein.

In addition, the node device may broadcast the cipher text corresponding to the target data and the cipher text corresponding to the encryption key, which are stored in the blockchain, to the target access terminal. After receiving information broadcasted from the node device, the target access terminal decrypts the received cipher text corresponding to the encryption key based on the private key corresponding to its node role to obtain the encryption key, and decrypts the cipher text corresponding to the target data based on the obtained encryption key.

The private key corresponding to the node role of the target access terminal may include user secret information configured in such target access terminal. The cipher text corresponding to the encryption key is obtained by encrypting the encryption key based on a key sequence formed by shared-in-role keys corresponding to all target node roles, respectively. The shared-in-role key is generated by aggregating the user secret information configured in all access terminals corresponding to the same target node role. Details may refer to those described in the foregoing embodiments, and are not repeated herein.

Technical solutions of the present disclosure not only achieve consistent maintenance on the block data among multiple node roles, but also ensure offering minimum levels of permissions for the block data. Hence, the multiple node roles are capable to not only share data efficiently through the blockchain, but also ensure the security and reliability of the data in the blockchain, and hence applicable to any scenario having a high requirement on efficiency and security of the data sharing. For example, the method may further be applied to scenarios of data sharing between departments or branches of an enterprise, and data sharing between multiple persons, which is not limited herein.

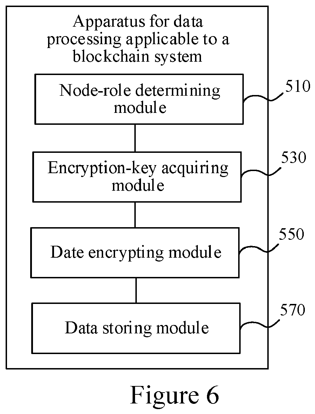

Figure 6 is a block diagram of an apparatus for data processing applicable to a blockchain system according to an embodiment of the present disclosure. The blockchain system comprises multiple node devices. Each node device is connected with at least one access terminal which has a permission of a node role corresponding to such node device. The apparatus is arranged in a node device of the blockchain system. As shown in Figure 6, the apparatus may comprise a node-role determining module 510, an encryption-key acquiring module 530, a data encrypting module 550, and a data storing module 570.

The node-role determining module 510 is configured to determine a target node role having a reading permission for target data, in response to a request from a target access terminal for writing the target data into a blockchain. The target access terminal is one of the at least one access terminal connected to the node device. The encryption-key acquiring module 530 is configured to acquire an encryption key corresponding to the target node role. The data encrypting module 550 is configured to encrypt the target data based on the encryption key, so as to obtain a cipher text corresponding to the target data. An access terminal corresponding to the target node role is capable to decrypt the cipher text corresponding to the target data. The storing module 570 is configured to store the cipher text corresponding to the target data into the blockchain.

In another embodiment, the encryption key includes a shared public key. The encryption-key acquiring module 530 comprises a public-key acquiring unit and a shared-public-key generating unit

The public-key acquiring unit is configured to acquire a public key corresponding to each target node role. The shared-public-key generating unit is configured to aggregate the public keys corresponding to all target node roles to generate the shared public key. The cipher text obtained by encrypting the target data based on the shared public key is decryptable based on a private key corresponding to each target node role.

In another embodiment, the public-key acquiring unit comprises a random-number generating subunit, a public-key generating subunit, and a random-number transmitting subunit.

The random-number generating subunit is configured to generate, in the node device, a random number corresponding to each target node role. The public-key generating subunit is configured to generate the public key corresponding to each target node role based on the random number corresponding to such target node role. The random-numbertransmitting subunit is configured to transmit the random number corresponding to each target node role to the access terminal corresponding to such target node role, so as to enable the access terminal to generate the private key corresponding to such target node role based on the random number.

In another embodiment, the encryption key includes a symmetric key. The encryption-key acquiring module 530 comprises a symmetric-key generating unit and a symmetric-key transmitting unit.

The symmetric-key generating unit is configured to generate the symmetric key in the node device. The symmetric-key transmitting unit is configured to transmit the symmetric key to the access terminal corresponding to the target node role, so as to enable the access terminal to decrypt the cipher text corresponding to the target data based on the symmetric key.

In another embodiment, the apparatus further comprises a first key encrypting module.

The first key encrypting module is configured to encrypt the encryption key based on a shared key corresponding to all target node roles to obtain a cipher text corresponding to the encryption key. The data storing module is further configured to store the cipher text corresponding to the encryption key into the blockchain along with the cipher text corresponding to the target data.

In another embodiment, the apparatus further comprises a shared-in-role-key acquiring module and a second key encrypting module.

The shared-in-role-key acquiring module is configured to aggregate user secret information configured in all access terminals corresponding to the same target node role, so as to generate a shared-in-role key corresponding to such target node role. The second key encrypting module is configured to encrypt the encryption key based on a key sequence formed by the shared-in-role keys corresponding to all target node roles, so as to obtain a cipher text corresponding to the encryption key. The data storing module is further configured to store the cipher text corresponding to the encryption key into the blockchain along with the cipher text corresponding to the target data.

In another embodiment, the apparatus further comprises a signature acquiring module and a signature verifying module.

The signature acquiring module is configured to acquire access-terminal signature information comprised in the target data.

The signature verifying module is configured to perform verification on the access-terminal signature information based on a public key corresponding to a node role of the target access terminal, and in a case that the access-terminal signature information passes the verification, trigger the node-role determining module to determine the target node role having the reading permission for the target data.

In another embodiment, the signature verifying module comprises a field-information acquiring unit and a signature-information verifying unit.

The field-information acquiring unit is configured to determine the node role of the target access terminal according to a key field comprised in the target data. The signature-information verifying unit is configured to search a locally stored public key list for the public key corresponding to the node role of the target access terminal, and perform the verification on the access-terminal signature information based on the public key that is found.

Another apparatus for data processing applicable to a blockchain system is further provided according to embodiments of the present disclosure, comprising a first cipher-text transmitting module.

The first cipher-text transmitting module is configured to transmit a cipher text corresponding to target data stored in a blockchain to a target access terminal, in response to a request which is from the target access terminal and for reading the target data. The access terminal has a permission of a node role corresponding to a node device connected to the access terminal, so as to enable the target access terminal to decrypt the cipher text corresponding to the target data based on a private key corresponding to the node role of the target access terminal to obtain the target data.

The target access terminal is one of at least one access terminals connected to the node device. The cipher text corresponding to the target data is obtained by encrypting the target data based on an encryption key, and the encryption key corresponds to a target node role having a reading permission for the target data.

In another embodiment, the apparatus further comprises a second ciphertext transmitting module.

The second cipher-text transmitting module is configured to transmit a cipher text, which corresponds to the encryption key and is stored in the blockchain, to the target access terminal, so as to enable the target access terminal to: decrypt the cipher text corresponding to the encryption key based on the private key corresponding to the node role of the target access terminal to obtain the encryption key, and decrypt the cipher text corresponding to the target data based on the obtained encryption key.

The cipher text corresponding to the encryption key is obtained by encrypting the encryption key based on a shared key corresponding to the target node role, and the shared key is generated by aggregating public keys corresponding to all target node roles.

In another embodiment, the first cipher-text transmitting module comprises a data broadcasting unit.

The data broadcasting unit is configured to broadcast the cipher text corresponding to the target data and a cipher text corresponding to the encryption key, which are stored in the blockchain, so as to enable the target access terminal to: decrypt the received cipher text corresponding to the encryption key based on the private key corresponding to the node role of the target access terminal to obtain the encryption key, and decrypt the cipher text corresponding to the target data based on the obtained encryption key.

The private key corresponding to the node role of the target access terminal includes user secret information configured in the target access terminal. The cipher text corresponding to the encryption key is obtained by encrypting the encryption key based on a key sequence formed by shared-in-role keys corresponding to all target node roles. The shared-in-role key is generated by aggregating user secret information configured in all access terminals corresponding to the same target node role.

The apparatuses provided in the foregoing embodiments belong to the same concepts as the methods provided in the foregoing embodiments. Specific manners of operations performed by each module and each unit of the apparatus have been described in details in the method embodiments, and are not repeated herein.

An electronic device is further provided according to embodiments of the present disclosure, comprising a processor and a memory. The memory stores computer-readable instructions, and the computer-readable instructions when executed by a processor implements the foregoing method for data processing applicable to the blockchain system.

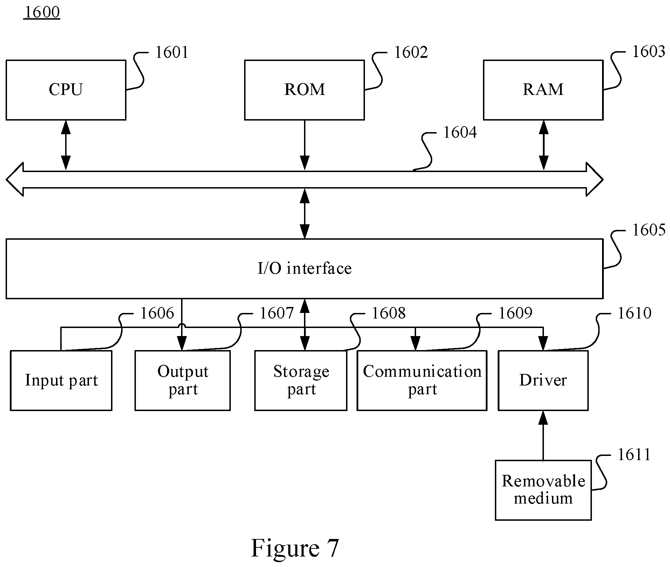

Figure 7 is a schematic structural diagram of a computer system of an electronic device suitable for implementing embodiments of the present disclosure. The computer system 1600 of the electronic device as shown in Figure 7 is merely an example, and does not constitute any limitation on functions or applications of embodiments of the present disclosure.

As shown in Figure 7, the computer system 1600 includes a central processing unit (CPU)1301 capable to perform various appropriate actions and processing, for example, perform the method according foregoing embodiments, according to a program stored in a read-only memory (ROM) 1602 or a program loaded into a random-access memory (RAM) 1603 from a storage component 1608. The RAM 1603 further stores various programs and data required for system operations. The CPU 1601, the ROM 1602, and the RAM 1603 are connected to each other via a bus 1604. An input/output (I/O) interface 1605 is coupled to the bus 1604.

Components connected to the I/O interface 1605 includes: an input component 1606, including a keyboard, a mouse, or the like; an output component 1607, including a cathode ray tube (CRT), a liquid crystal display (LCD), a speaker, and the like; the storage component1308, including a hard disk or the like; and a communication component 1609, including a network interface card such as an LAN card or a modem. The communication component 1609 performs communication via a network such as the Internet. A driver 1610 is further coupled to the I/O interface 1605 on requirements. A removable medium 1611, such as a magnetic disk, an optical disc, a magneto-optical disk, or a semiconductor memory, is installed on the drive 1610 on requirement, so that a computer program read from the removable medium can be installed on the storage component 1608 on requirement.

Particularly, according to an embodiment of the present disclosure, the foregoing processes described with reference to the flowcharts may be implemented as computer software programs. A computer program product is provided according to an embodiment of the present disclosure. The computer program product includes a computer program stored in a computer-readable medium. The computer program includes program codes for performing the method as shown in the flowcharts. In such embodiment, the computer program may be downloaded and installed from the network via the communication portion 1609, and/or installed from the removable medium 1611. When the computer program is executed by the CPU 1601, various functions defined in the method and the apparatus according to embodiments of the present disclosure are implemented.

The computer-readable medium according to embodiments the present disclosure may be a computer-readable signal medium, a computer-readable storage medium, or any combination of the two. For example, he computer-readable storage medium may be, but is not limited to, an electric/magnetic/optical/electromagnetic/infrared/semiconductor system/apparatus/component, or any combination of the above forms. A more specific example of the computer-readable storage medium may include, but is not limited to, an electrical connection having one or more wires, a portable computer magnetic disk, a hard disk, a random-access memory (RAM), a read-only memory (ROM), an erasable programmable read-only memory (EPROM or a flash memory), an optical fiber, a compact disk read-only memory (CD-ROM), an optical storage device, a magnetic storage device, or any appropriate combination of the above forms. Herein the computer-readable storage medium may be any tangible medium containing or storing a program, and the program may be used by, or in combination with, an instruction executing system/apparatus/device. Herein the computer-readable signal medium may include a data signal transmitted in a baseband or propagating as a part of a carrier wave, and the data signal carries computer-readable program codes. The propagating data signal may be various forms, which include but is not limited to an electromagnetic signal, an optical signal, or any suitable combination of the two. The computer-readable signal medium may be any computer-readable medium other than the computer-readable storage medium. The computer-readable medium may send, carry, or transmit a program, and the program is used by or in combination with an instruction executing system/apparatus/device. The program codes contained in the computer-readable medium may be transmitted via any appropriate medium, which includes but is not limited to: a wireless medium, a wire, an optical cable, radio frequency, any suitable combination of the above forms, or the like.

The flowcharts and block diagrams in the drawings illustrate feasible system architecture, functions, and operations that may be implemented by a system, a method, and a computer program product according to various embodiments of the present disclosure. In this regard, each box in a flowchart or a block diagram may represent a module, a program segment, or a part of codes. The module, the program segment, or the part of codes includes one or more executable instructions configured to implement a designated logic function. In some alternative embodiments, functions as annotations in the boxes may be implemented in a sequence different from that as shown in the drawings. For example, in practice, two boxes shown in succession may be performed substantially simultaneously, and sometimes may be performed in a reverse sequence, which is determined by related functions. Each block/box and a combination of block/boxes in a block diagram and/or a flowchart may be implemented through a dedicated hardware-based system, which is configured to achieve a specified function or operation, or may be implemented through a combination of dedicated hardware and computer instructions.

A relevant unit described in embodiments of the present disclosure may be implemented as software or hardware, and may be provided in a processor. Names of units may not constitute a limitation on these units in some case.

A computer-readable storage medium is further provided according to another aspect of the present disclosure. A computer program is stored in the computer-readable storage medium. The computer program when executed by a processor implements the foregoing method for data processing applicable to the blockchain system. The computer-readable medium may be comprised in the electronic device as described in the foregoing embodiments, or may be independent and is not disposed in the electronic device.

A computer program product or a computer program is provided according to another aspect of the present disclosure. The computer program product or the computer program comprises computer instructions. The computer instructions are stored in a computer-readable storage medium. A processor of a computer device reads the computer instructions from the computer-readable storage medium, and executes the computer instructions to configure the computer device to perform the method for data processing applicable to the blockchain system as described in the forgoing embodiments.

Hereinafter described are merely preferable embodiments of the present disclosure, which are not intended to limit embodiments of the present disclosure. Those skilled in the art can make equivalent changes or modifications easily according to the main concept and spirit of the present disclosure. Therefore, the protection scope of the present disclosure is subject to the protection scope specified in the claims.

## Claims

1. A method for data processing applicable to a blockchain system, wherein:
the blockchain system comprises a plurality of node devices, each of which is connected to at least one access terminal and corresponds to a node role, and the at least one access terminal each has a permission of the node role; and
the method is applicable to a node device in the blockchain system, and comprises:
determining, in response to a request which is from a target access terminal and for writing target data into a blockchain, a target node role which has a reading permission for the target data, wherein the target access terminal is one of the at least one access terminal connected to the node device;
acquiring an encryption key corresponding to the target node role;
encrypting the target data based on the encryption key to obtain a cipher text corresponding to the target data, wherein an access terminal corresponding to the target node role is capable to decrypt the cipher text corresponding to the target data; and
storing the cipher text corresponding to the target data into the blockchain.

2. The method according to claim 1, wherein the encryption key comprises a shared public key, and acquiring the encryption key corresponding to the target node role comprises:
acquiring a public key corresponding to each target node role; and
aggregating the public keys corresponding to all target node roles to generate the shared public key, wherein the cipher text obtained by encrypting the target data based on the shared public key is decryptable based on a private key corresponding to each target node role.

3. The method according to claim 2, wherein acquiring the public key corresponding to each target node role comprises:
generating, in the node device, a random number corresponding to said target node role; and
generating the public key corresponding to said target node role according to the random number corresponding to said target node role; and
the method further comprises:
transmitting the random number corresponding to each target node role to the access terminal corresponding to said target node role to enable the access terminal to generate the private key corresponding to said target node role based on the random number.

4. The method according to claim 1, wherein the encryption key comprises a symmetric key, and acquiring the encryption key corresponding to the target node role comprises:
generating the symmetric key in the node device; and
the method further comprises:
transmitting the symmetric key to the access terminal corresponding to the target node role to enable the access terminal to decrypt the cipher text corresponding to the target data based on the symmetric key.

5. The method according to claim 1, further comprising:
encrypting the encryption key based on a shared key corresponding to all target node roles to obtain a cipher text corresponding to the encryption key; and
wherein storing the cipher text corresponding to the target data into the blockchain comprises:
storing the cipher text corresponding to the encryption key into the blockchain along with the cipher text corresponding to the target data.

6. The method according to claim 1, further comprising:
aggregating user secret information configured in all access terminals corresponding to the same target node role to generate a shared-in-role key corresponding to said target node role; and
encrypting the encryption key based on a key sequence formed by the shared-in-role keys corresponding to all target node roles to obtain a cipher text corresponding to the encryption key;
wherein storing the cipher text corresponding to the target data into the blockchain comprises:
storing the cipher text corresponding to the encryption key into the blockchain along with the cipher text corresponding to the target data.

7. The method according to claim 1, further comprising:
acquiring access-terminal signature information comprised in the target data;
performing verification on the access-terminal signature information based on a public key corresponding to a node role of the target access terminal; and
performing the step of determining the target node role having the reading permission for the target data, in a case that the access-terminal signature information passes the verification.

8. The method according to claim 7, wherein performing the verification on the access-terminal signature information based on the public key corresponding to the node role of the target access terminal comprises:
determining the node role of the target access terminal according to a key field comprised in the target data;
searching a locally stored public key list for the public key corresponding to the node role of the target access terminal; and
performing the verification on the access-terminal signature information based on the public key that is found.

9. A method for data processing applicable to a blockchain system, wherein:
the blockchain system comprises a plurality of node devices, each of which is connected to at least one access terminal and corresponds to a node role, and the at least one access terminal each has a permission of the node role; and
the method is applicable to a node device in the blockchain system, and comprises:
transmitting, in response to a request which is from a target access terminal and for reading target data stored in a blockchain, a cipher text corresponding to the target data to the target access terminal to enable the target access terminal to decrypt the cipher text corresponding to the target data based on a private key corresponding to a node role of the target access terminal to obtain the target data;
wherein the target access terminal being one of the at least one access terminal connected to the node device, the cipher text corresponding to the target data is obtained by encrypting the target data based on an encryption key which corresponds to a target node role having a reading permission for the target data.

10. The method according to claim 9, further comprising:
transmitting a cipher text, which corresponds to the encryption key and is stored in the blockchain, to the target access terminal to enable the target access terminal to:
decrypt the cipher text corresponding to the encryption key based on the private key corresponding to the node role of the target access terminal to obtain the encryption key, and
decrypt the cipher text corresponding to the target data based on the obtained encryption key,
wherein the cipher text corresponding to the encryption key is obtained by encrypting the encryption key based on a shared key corresponding to the target node role, and the shared key is generated by aggregating public keys corresponding to all target node roles.

11. The method according to claim 9, wherein transmitting the cipher text corresponding to the target data to the target access terminal comprises:
broadcasting the cipher text corresponding to the target data and the cipher text corresponding to the encryption key, which are stored in the blockchain, to enable the target access terminal to:
decrypt the cipher text corresponding to the encryption key based on the private key corresponding to the node role of the target access terminal to obtain the encryption key, and
decrypt the cipher text corresponding to the target data based on the obtained encryption key.

12. The method according to claim 11, wherein:
the private key corresponding to the node role of the target access terminal comprises user secret information configured in the target access terminal;
the ciphertext corresponding to the encryption key is obtained by encrypting the encryption key based on a key sequence formed by shared-in-role keys corresponding to all target node roles; and
the shared-in-role key is generated by aggregating user secret information configured in all access terminals corresponding to the same target node role.

13. An apparatus for data processing applicable to a blockchain system, wherein:
the blockchain system comprises a plurality of node devices, each of which is connected to at least one access terminal and corresponds to a node role, and the at least one access terminal each has a permission of the node role; and
the apparatus is arrange in a node device in the blockchain system, and comprises:
a node-role determining module, configured to determine a target node role having a reading permission for target data, in response to a request from a target access terminal for writing the target data into a blockchain, wherein the target access terminal is one of the at least one access terminal connected to the node device;
an encryption-key acquiring module, configured to acquire an encryption key corresponding to the target node role;
a data encrypting module, configured to encrypt the target data based on the encryption key to obtain a cipher text corresponding to the target data, wherein an access terminal corresponding to the target node role is capable to decrypt the cipher text corresponding to the target data; and
a data storing module, configured to store the cipher text corresponding to the target data into the blockchain.

14. An electronic device, comprising:
a memory, configured to store computer-readable instructions; and
a processor, configured to read the computer-readable instructions stored in the memory to perform the method according to any one of claims 1 to 12.

15. A computer-readable storage medium, storing a computer program, wherein:
the computer program is configured to perform the method according to any one of claims 1 to 12.

16. A computer program product, comprising instructions, wherein:
the instructions when executed on a computer configure the computer to perform the method according to any one of claims 1 to 12.
